# EUROPÄISCHE PATENTSCHRIFT

(11) **EP 4 065 844 B1**
(45) Veröffentlichungstag und Bekanntmachung des Hinweises auf die Patenterteilung: **25.02.2026**
(21) Anmeldenummer: 20804530.2
(22) Anmeldetag: 11.11.2020
(51) Int. Cl.: F04B 39/06, F04B 41/00, F04B 49/06, F04B 49/20

(54) **KOMPRESSORSYSTEM FÜR EIN SCHIENENFAHRZEUG UND VERFAHREN ZUR STEUERUNG EINER KÜHLEINRICHTUNG EINES KOMPRESSORSYSTEMS**
COMPRESSOR SYSTEM FOR A RAIL VEHICLE, AND METHOD FOR CONTROLLING A COOLING DEVICE OF A COMPRESSOR SYSTEM
SYSTÈME DE COMPRESSEUR POUR UN VÉHICULE FERROVIAIRE ET PROCÉDÉ DE COMMANDE D'UN DISPOSITIF DE REFROIDISSEMENT D'UN SYSTÈME DE COMPRESSEUR

(30) Priorität: 26.11.2019 DE 102019131921
(43) Veröffentlichungstag der Anmeldung: 05.10.2022
(73) Patentinhaber: KNORR-BREMSE Systeme für Schienenfahrzeuge GmbH, 80809 München (DE)
(72) Erfinder: MERKEL, Thomas, 50354 Hürth (DE); SCHMID, Martin, 80636 München (DE); KRAMLICH, Adrian, 80807 München (DE); AFSHAR, Ehsan, 80686 München (DE); WINKLER, Michael, 80807 München (DE)
(86) Internationale Anmeldenummer: PCT/EP2020/081758
(87) Internationale Veröffentlichungsnummer: WO 2021/104877

(56) Entgegenhaltungen:
- WO-A1-2015/082430
- CN-A- 110 318 983
- DE-A1- 102013 113 557
- DE-U1- 202017 001 925

## Beschreibung

Die Erfindung betrifft ein Kompressorsystem für ein Schienenfahrzeug, ein Verfahren zur Steuerung einer Kühleinrichtung eines Kompressorsystems sowie ein dafür vorgesehenes Computerprogrammprodukt.

Kompressoren werden in einer Vielzahl technischer Anwendungen eingesetzt. In modernen Schienenfahrzeugen, als ein Beispiel eines solchen Einsatzgebietes, kommt der Reduzierung von Schallemissionen eine immer größere Bedeutung zu. Gleichzeitig muss der Temperaturhaushalt des Kompressors im gesamten Temperaturspektrum, bei Schienenfahrzeugen beispielsweise zwischen - 40°C und + 50°C, und auch in engen Einbauräumen gewährleistet werden.

Herkömmliche Kompressorsysteme von Druckluftkompressoren in Schienenfahrzeugen umfassen einen Kompressor sowie gegebenenfalls einen Nachkühler oder, wie bei zweistufigen Kolbenkompressoren, einen Zwischen und einen Nachkühler. Der Kompressor kann als Kolbenmaschine oder auch als Rotationsverdichter, beispielsweise als Schrauben- oder Scrollkompressor, ausgeführt werden und wird überwiegend luftgekühlt. Die Luftkühlung erfolgt dabei über Lüfter, wie beispielsweise einen oder mehrere Lüfter oder Elektrolüfter, die durch mechanische oder signaltechnische Kopplung korrespondierend zur Verdichterdrehzahl betrieben werden.

Bei hohen Umgebungstemperaturen und ungünstigen Raumverhältnissen kommt es dennoch häufig zu einer Überhitzung des Kompressors. Umgekehrt besteht durch diese direkte Koppelung durch die damit eingebrachte hohe Kühlleistung bei niedrigen Ansaugtemperaturen und kurzen Betriebszeiten das Risiko einer internen Eisbildung bzw. Kondensatansammlungen und damit einhergehenden Betriebseinschränkungen sowie erhöhtem Verschleiß und erhöhter Korrosion. Hieraus ergibt sich ein Zielkonflikt der mit herkömmlichen Kühlsystemen aufgrund der Kopplung der Kühlerlufterdrehzahl an die Verdichterdrehzahl nicht gelöst werden kann.

In diesem Zusammenhang betrifft die CN 110318983 A ein Betriebssteuerungssystem zur Verhinderung einer Vereisung eines Luftkompressors für ein Schienenfahrzeug. Bei dem System ist ein Kühlflügelrad an einem Wärmestrahler angeordnet und unabhängig davon steuerbar. Die DE 20 2017 001 925 U1 betrifft eine Regeleinheit für einen Verdichter, wobei ein erster Umrichter dazu eingerichtet ist, den das Verdichterelement antreibenden ersten Motor mit variabler Drehzahlregelung zu regeln, und ein zweiter Umrichter dazu eingerichtet ist, einen zweiten Motor mit variabler Drehzahlregelung zu regeln, der einen Ventilator antreibt, der zum Kühlen des Verdichters eingerichtet ist. Die WO 2015/082430 A1 betrifft ein Kompressorsystem für ein Schienenfahrzeug, umfassend einen von einer elektrischen Maschine über eine Antriebswelle angetriebenen Kompressor zur Erzeugung von Druckluft, wobei die elektrische Maschine zumindest mittelbar über eine Regelungseinrichtung zum Betrieb der elektrischen Maschine mit zumindest einer zwischen einer maximalen Drehzahl und einer minimalen Drehzahl befindlichen Nenndrehzahl ansteuerbar ist. Die Regelungseinrichtung steuert zumindest mittelbar eine stromabwärts des Kompressors angeordnete Kühlereinheit mit Kühlerlüfter an, wobei eine Drehzahl des Kühlerlüfters kontinuierlich durch die Regelungseinrichtung einstellbar ist.

In Anbetracht der vorstehenden Ausführungen ist es somit Aufgabe der Erfindung, ein Kompressorsystem, ein Verfahren zur Steuerung einer Kühleinrichtung eines Kompressorsystems sowie ein Computerprogrammprodukt zur Ausführung des Verfahrens bereitzustellen, die eine verbesserte Kühlung des Kompressorsystems ermöglicht.

Die Aufgabe wird durch ein Kompressorsystem, ein Verfahren zur Steuerung einer Kühleinrichtung eines Kompressorsystems sowie ein Computerprogrammprodukt gemäß den unabhängigen Ansprüchen gelöst. Vorteilhafte Weiterbildungen der Erfindung sind in den abhängigen Ansprüchen enthalten.

Erfindungsgemäß weist das Kompressorsystem einen Kompressor, eine Kühleinrichtung und eine Steuerungsvorrichtung. Gemäß einer Offenbarung weist das Kompressorsystem eine Schnittstelle zum Empfang von Steuerungssignalen einer Steuerungsvorrichtung auf. Erfindungsgemäß ist die Steuerungsvorrichtung dazu konfiguriert, die Kühleinrichtung unabhängig vom Betrieb, insbesondere von der Drehzahl, des Kompressors anzusteuern.

Die Kühleinrichtung des Kompressorsystems kann somit unabhängig von einer Verdichterdrehzahl des Kompressors abgestimmt auf die für einen optimalen Betrieb notwendige Kühlleistung betrieben werden. Dies kann über eine separate signaltechnische Ansteuerung eines eigenständigen energetischen Antriebs der Kühleinrichtung und/oder beispielsweise auch bei mechanischer Kopplung der Kühleinrichtung an den Kompressor durch die Verwendung schaltbarer Übersetzungen implementiert werden. Eine separate signaltechnische Ansteuerung der Kühleinrichtung bietet zudem den Vorteil, dass die Ansteuerung in einem solchen Fall auch unabhängig davon ist, ob der Kompressor grundsätzlich ein- oder ausgeschaltet ist.

Eine separate signaltechnische Ansteuerung bedingt dabei nicht zwingend separate Steuerungsvorrichtungen für den Kompressor und die Kühleinrichtung, sondern ist auf eine unabhängige Signalweitergabe und einen unabhängigen Signalinhalt gerichtet. Eine solche Unabhängigkeit wird nicht dadurch begrenzt, dass bei der Signalerzeugung zur Ansteuerung der Kühleinrichtung ggf. auch Kompressorbetriebszustände berücksichtigt werden. Beispielsweise kann eine grundsätzlich unabhängige Ansteuerung erfolgen, wobei aber ab einer bestimmten Verdichterdrehzahl zumindest ein Grundbetrieb der Kühleinrichtung vorgesehen ist.

Der Betrieb der Kühleinrichtung kann über eine separate signaltechnische Ansteuerung erfolgen, wobei in Betriebszuständen, in denen der Kompressor parallel zur Kühleinrichtung betrieben wird, eine mechanische Kopplung an die Verdichterdrehzahl den Betrieb der Kühleinrichtung unterstützen kann. In diesem Sinne ist die Ansteuerung der Kühleinrichtung immer noch unabhängig, wobei die Kopplung lediglich eine wählbare Antriebsfunktion oder Antriebsunterstützung darstellt.

Durch die vom Betrieb des Kompressors unabhängige Ansteuerung der Kühleinrichtung kann die Kühleinrichtung bedarfsweise zu- und abgeschaltet werden. Hierdurch können Überhitzungen und/oder Kondensatansammlungen vermieden oder zumindest vermindert werden. Insbesondere ist eine solche Kühleinrichtung bei wiederkehrenden Betriebsszenarien präventiv einsetzbar.

Somit kann das Kompressorsystem, insbesondere der Kompressor selbst, im optimalen Betriebspunkt betrieben werden. Dies wirkt sich nicht nur positiv auf die Effizienz und Lebensdauer des Kompressorsystems aus, sondern kann auch eine Überlastung eines nachgeordneten Trockners durch zu hohe Trocknereingangstemperaturen vermeiden, wodurch auch dessen Effizienz und die Lebensdauer des Trocknungsmittels erhöht werden.

Zudem ist die Kühleinrichtung dazu konfiguriert, eine variable Kühlfluidvolumenstromrate, insbesondere eine Kühlluftvolumenstromrate, bereitstellen zu können, die durch die Steuerungsvorrichtung als Stellgröße vorgebbar ist.

In diesem Zusammenhang sei angemerkt, dass die Steuerungsvorrichtung nicht auf eine reine Steuerung der Kühleinrichtung beschränkt ist, sondern über diese je nach Ausgestaltung auch auf eine Regelung gerichtet sein kann. Dies ist dann der Fall, wenn eine entsprechende Regelgröße überwacht und verglichen wird. Sofern der Begriff "steuern" verwendet wird, kann dieser eine Regelung mitumfassen, also darauf erweitert sein, wenn beispielswese entsprechende Detektionseinheiten vorgesehen sind, oder werden, sofern sich dies nicht ausschließt.

Die Kühleinrichtung verfügt somit über eine Anpassungseinrichtung, die ein pro Zeiteinheit zur Kühlung bereitgestelltes Fluidvolumen variieren kann. Beispielsweise kann hierzu eine Durchflussmenge eines Fluids über eine Ventilstellung oder eine Generierungsmenge über eine Antriebsleistung, wie eine Durchflussmenge gemäß einer Lüfterdrehzahl, entsprechend angesteuert werden. Aufgrund ihrer guten Verfügbarkeit stellt die Verwendung von Luft als Kühlmittel eine einfache und kostengünstige Lösung dar. Auch wenn Luft nicht alleinig als Kühlmittel verwendet wird, kann zumindest durch Variation der Luftdurchflussmenge die Kühlung in einfacher Weise angepasst werden.

Alternativ oder ergänzend können als Stellgröße auch die Kühlfluidtemperatur und/oder Ein- und Ausschaltzeitpunkte der Kühleinrichtung genutzt werden.

Das Kompressorssystem kann vereinfacht aufgebaut sein, wenn das Kompressorsystem keine eigene Steuerungsvorrichtung zur Ansteuerung der Kühleinrichtung und/oder des Kompressors umfasst, sondern lediglich eine Schnittstelle zum Empfang einer entsprechenden externen Steuerungsvorrichtung aufweist.

In einer Ausgestaltung des Kompressorsystems ist die Steuerungsvorrichtung eine zentrale Steuerungsvorrichtung, insbesondere ein Inverter, des Kompressorsystems. Gemäß einer Offenbarung weist das Kompressorsystem eine Schnittstelle zum Empfang von Steuerungssignalen einer zentralen Steuerungsvorrichtung des Schienenfahrzeugs auf.

Bei einer zentralen Steuerungsvorrichtung eines Schienenfahrzeugs können weitere Einflussfaktoren für die Ansteuerung der Kühleinrichtung und/oder des Kompressors berücksichtigen werden. Eine zentrale Intelligenz kann auch selbstlernende Funktionalitäten umfassen, um das Reaktionsverhalten auf bestimmte Rahmenbedingungen zu beschleunigen, zu präzisieren und/oder im Hinblick auf weitere Funktionskomponenten des Schienenfahrzeugs abzustimmen. Durch selbstlernende Funktionalitäten der Steuerungsvorrichtung können ungünstige Betriebssituationen vermieden werden, wenn der Kompressor beispielsweise mit niedriger Einschaltdauer betrieben und die Einschaltdauer und Einschaltverhalten der Kühleinrichtung derart optimiert wird, dass die Temperatur im Mittel über die Einschaltungen optimiert ist. So kann die Kühleinrichtung beispielsweise erst aktiviert werden, wenn die für einen optimalen (verschleißarmen) Betrieb erforderliche Mindest-Temperatur eines maßgeblichen Bauteils erreicht ist und die Kühlleistung anhand von einem oder mehreren maßgeblichen Prozessparametern, wie der Temperatur und/oder des Drucks, geregelt wird. Die vorstehenden Ausführungen zur zentralen Steuerungsvorrichtung des Schienenfahrzeugs können analog auf die zentrale Steuerungsvorrichtung des Kompressorsystems übertragen werden. Zur Berücksichtigung weiterer Einflussgrößen, die nicht direkt über die zentrale Steuerungsvorrichtung des Kompressorssystems bereitgestellt werden, können entsprechende Schnittstellen zum Empfang entsprechender Eingangssignale bedarfsgerecht vorgesehen werden.

Erfindungsgemäß weist das Kompressorsystem eine Temperaturdetektionseinheit zur Detektion einer Lufttemperatur und Öltemperatur auf. Ergänzend kann das Kompressorsystem auch eine Temperaturdetektionseinheit zur Detektion einer Bauteiltemperatur aufweisen. Die Steuerungsvorrichtung ist dazu konfiguriert, die Kühleinrichtung auf Basis einer durch die Temperaturdetektionseinheit detektierten Lufttemperatur und Öltemperatur und ggf. ergänzend einer Bauteiltemperatur, anzusteuern.

Demnach erfolgt die Anpassung der Stellgröße in Form einer Regelung auf Basis zumindest eines Temperatursignals. Über die Temperaturmessung können direkte Rückschlüsse auf die Wahrscheinlichkeit einer Überhitzung und/oder Kondensatbildung gezogen werden, so dass beispielsweise in Abhängigkeit in der Steuerungsvorrichtung hinterlegter Grenzwerte oder anderweitiger Algorithmen eine Stellgrößenanpassung vorgenommen werden kann. Eine entsprechende Temperaturdetektionseinheit kann einen oder mehrere Temperatursensoren umfassen.

Durch die Messung der Bauteiltemperatur kann zudem nicht nur ein allgemeines Überhitzungs- und/oder Kondensatbildungsrisiko detektiert und diesem entgegengewirkt werden, sondern es ist auch möglich, die Bauteiltemperatur im Hinblick auf übermässigen Verschleiß und Alterung, beispielsweise von Elastomeren, Lagerfetten, Kolbenringen oder anderen temperaturalterungssensiblen Materialien, zu überwachen. Selbst wenn es nicht zu einer tatsächlichen Überhitzung kommt, können die Temperaturdaten des Bauteils dokumentiert werden, um darauf basierend Wartungsintervalle anzupassen. Dies gilt gleichermaßen für die Messung der Öltemperatur.

Alternativ oder ergänzend können jedoch auch andere Messgrößen für die Regelung der Kühleinrichtung herangezogen werden, die mit einer Überhitzungs- und/oder Kondensatbildungswahrscheinlichkeit korrelieren. Im Hinblick auf eine Kondensatbildung oder eine entsprechende Wahrscheinlichkeit kann zum Beispiel auch ein Feuchtesensor eingesetzt werden.

Erfindungsgemäß umfasst das Kompressorsystem einen Nachkühler und optional einen Zwischenkühler, der oder die dem Kompressor in Strömungsrichtung der durch den Kompressor strömenden Luft nachgelagert sind, und die Steuerungsvorrichtung ist dazu konfiguriert, die Kühleinrichtung auf Basis einer Nachkühleraustrittstemperatur und optional einer Zwischenkühleraustrittstemperatur der Luft und einer Ölsumpftemperatur anzusteuern.

Durch die Messung der Nachkühleraustrittstemperatur und optional der Zwischenkühleraustrittstemperatur der Luft wird die Kühlleistung des Nachkühlers und optional des Zwischenkühlers, der beispielsweise bei zweistufigen Kompressoren der ersten Kompressionsstufe des Kompressors in Strömungsrichtung nachgeschaltet ist, bevor die zweite Kompressionsstufe des Kompressors und daran anschließend der Nachkühler durchlaufen wird, im Hinblick auf eine Überhitzungs- und/oder Kondensatbildungswahrscheinlichkeit berücksichtigt. Somit kann die Ansteuerung der Kühleinrichtung unabhängig von möglichen Leistungsdaten bzw. Betriebseinstellungen des Kompressors und des jeweiligen Kühlers erfolgen, das heißt, die jeweilige Temperatur wird direkt detektiert und nicht indirekt über andere Größen abgeleitet, was grundsätzlich aber möglich wäre. Bei einer indirekten Ableitung wäre beispielsweise bei einer Messung der Kompressoraustrittstemperatur der Luft die weitere Abkühlung durch den Nachkühler und/oder den Zwischenkühler in der Steuerungsvorrichtung abzubilden, was den Komplexitätsgrad der Steuerungsalgorithmen erhöht und Abweichungen des angenommenen Kühlvermögens des Nachkühlers und/oder des Zwischenkühlers vom tatsächlichen Kühlvermögen unberücksichtigt lässt.

Durch die ergänzende Messung der Ölsumpftemperatur kann zudem durch eine daran angepasste Ansteuerung der Kühleinrichtung dem Eintrag von Wasser in das Öl bei zu niedrigen Temperaturen und einer temperaturbedingten Verringerung der Öllebensdauer entgegengewirkt werden.

Zudem kann es vorteilhaft sein, sowohl die Nachkühleraustrittstemperatur als auch die Ölsumpftemperatur zu messen, um eine auf beide Temperaturen abgestimmte Ansteuerung der Kühleinrichtung vornehmen zu können. Ebenso kann der Ausfall einer der Temperaturdetektionseinheiten durch die jeweils andere Temperaturdetektionseinheit kompensiert werden. Neben einer redundanten Auslegung kann über die parallelen Messungen aber auch eine Plausibilitätsprüfung erfolgen, die insbesondere Hinweise auf Fehlfunktionen der Temperaturdetektionseinheiten liefert. Dies trifft gleichermaßen auf eine Verwendung mehrerer Sensoren in einer Temperaturdetektionseinheit zu. Diese Vorteile sind nicht auf eine Nachkühleraustrittstemperatur der Luft und einer Ölsumpftemperatur beschränkt, sondern gelten gleichermaßen für die Erfassung durch andere Detektionseinheiten, die sich auf zumindest zwei unterschiedliche Messgrößen beziehen.

In einer Ausgestaltung ist die vorstehende Temperaturdetektionseinheit oder eine weitere Temperaturdetektionseinheit im Bereich eines Nachkühlers und/oder des Zwischenkühlers des Kompressorsystems, insbesondere im Luftstrom auf einer luftstromabwärtigen Seite des Nachkühlers und/oder des Zwischenkühlers, vorgesehen.

Wie bereits ausgeführt, vereinfacht die Berücksichtigung der Temperatur im Bereich des Nachkühlers die Auslegung des Steuerungsalgorithmus und erhöht die Verlässlichkeit der Ansteuerung. Das gewonnene Messsignal kann alleinig oder in Verbindung mit weiteren Messsignalen genutzt werden. Insbesondere eine Messung im Luftstrom hinter dem Nachkühler kann hinsichtlich der Anordnung einer Temperaturdetektionseinheit aufgrund der guten Zugänglichkeit von Vorteil sein.

Erfindungsgemäß ist die Steuerungsvorrichtung dazu konfiguriert, einen Differenzabgleich der Nachkühleraustrittstemperatur der Luft und der Ölsumpftemperatur mit einem jeweiligen vorbestimmten Grenzwert der Nachkühleraustrittstemperatur der Luft und der Ölsumpftemperatur als Eingangsgröße für die Ansteuerung der Kühleinrichtung zu berücksichtigen, insbesondere den Differenzabgleich als Stellgröße zur Steuerung eines internen und externen Ölkreislauf bei einer jeweiligen Temperaturdifferenz oberhalb eines vorbestimmten Grenzwerts zu nutzen.

Üblicherweise wird beispielsweise bei ölgeschmierten Kompressoren ab Erreichen eines vorbestimmten minimalen Grenzwerts der Ölsumpftemperatur von einem inneren Ölkreislauf, der den Ölkühler nicht durchläuft, auf einen äußeren Ölkreislauf, der durch den Ölkühler geführt wird, umgeschaltet, um einen maximalen Grenzwert der Ölsumpftemperatur nicht zu überschreiten. Gemäß der vorstehenden Ausgestaltung wird jedoch nicht nur die Ölsumpftemperatur hierfür betrachtet, sondern auch die Nachkühleraustrittstemperatur. Das Umschalten auf den äußeren Ölkreislauf kann hierdurch nicht schon alleinig bei Erreichen des minimalen Grenzwerts der Ölsumpftemperatur erfolgen, sondern hinausgezögert werden, solange die Ölsumpftemperatur unterhalb des maximalen Grenzwerts der Ölsumpftemperatur und die Nachkühleraustrittstemperatur der Luft unterhalb eines vorbestimmten Grenzwerts der Nachkühleraustrittstemperatur liegt. Ein Umschalten auf den äußeren Ölkreislauf ist in diesem Fall erst dann vorgesehen, wenn eines der vorgenannten Kriterien nicht mehr erfüllt ist, also der maximale Grenzwert der Ölsumpftemperatur und/oder der vorbestimmte Grenzwert der Nachkühleraustrittstemperatur erreicht oder überschritten wird.

In einer Weiterbildung ist die Steuerungsvorrichtung dazu konfiguriert, für die Ansteuerung der Kühleinrichtung Temperaturverluste, insbesondere Temperaturverluste über ein Gehäuse, und/oder Temperaturträgheiten, insbesondere eine Trägheit einer Öltemperatur, als Störgrößen, insbesondere über zumindest ein Proportionalglied, zu berücksichtigen.

Temperaturverluste, wie über das Kompressor- oder Nachkühlergehäuse, und/oder Temperaturträgheiten können störend auf eine Regelgröße einwirken. Durch die Berücksichtigung einer oder mehrerer solcher Störgrößen kann die Regelstrecke die Stellgröße entsprechend anpassen. Die Verwendung eines Proportionalglieds ermöglicht eine schnelle Reaktion. Das Proportionalglied kann beispielsweise auch von einem PT1- oder PT2-Glied oder einem PID-Regler umfasst sein.

In einer Ausgestaltung umfasst die Kühleinrichtung zumindest einen Lüfter, insbesondere zumindest einen Elektrolüfter.

Lüfter als Kühleinrichtung lassen sich in einfacher Weise in entsprechende Kompressorsysteme integrieren und nachrüsten. Umfasst die Kühleinrichtung mehrere Lüfter kann die Kühlung gezielt lokal erfolgen und die jeweilige Kühlleistung durch Reduzierung des erforderlichen Luftstroms aufgrund geringerer Distanzen zum zu kühlenden Objekt und/oder zu kühlenden Luftstrom verringert werden.

Insbesondere sind zumindest jeweils ein Lüfter für einen Ölkreislauf des Kompressorsystems und ein Lüfter für die Druckluftnachkühlung und/oder eine Druckluftzwischenkühlung vorgesehen.

Sowohl der Ölkreislauf als auch die Druckluft sind im Hinblick auf die Auswirkungen einer Überhitzung oder Unterkühlung als Steuer- oder Regelungsgrößen maßgeblich, so dass eine gezielte lokale Kühlung durch zumindest jeweils einen Lüfter zur Vermeidung von Überhitzungen eine schnelle Reaktionsmöglichkeit bietet. Zudem ist es im Sinne einer Vermeidung oder zumindest einer Verminderung einer Kondensatbildung von Vorteil, wenn durch eine lokale Kühlung der Einflussbereich jeweiliger Lüfter lokal begrenzt wird, insbesondere, wenn diese individuell angesteuert werden.

In einer Ausgestaltung ist die Steuerungsvorrichtung dazu konfiguriert, einen Nachlaufbetrieb der Kühleinrichtung auszuführen, nachdem der Kompressor in einen Aussetzbetrieb geschaltet wurde, und/oder die Kühleinrichtung nicht oder nur teilweise zu aktivieren, wenn der Kompressor anläuft.

Demnach kann auf Basis von Betriebs- und/oder Umgebungsdaten ein Nachlaufbetrieb der Kühleinrichtung vorgesehen werden, so dass die Kühleinrichtung für einen vorbestimmten Zeitraum und/oder bis zum Eintritt eines vordefinierten Ereignisses weiter betrieben wird. Ein entsprechend vordefiniertes Ereignis kann beispielsweise das Absenken einer detektierten Temperatur um einen vorbestimmten Betrag oder das Unterschreiten einer vorbestimmten absoluten Grenztemperatur oder einer maximalen Differenztemperatur zur Ansaugtemperatur sein. Die Kühleinrichtung kann nach Schalten des Kompressors in den Aussetzbetrieb über den jeweiligen Zeitraum mit konstanten Betriebsparametern weiter betrieben werden oder aber auch ein Nachlaufbetriebsparameterschema abfahren, beispielsweise im Fall eines Lüfters die Lüfterdrehzahl kontinuierlich reduzieren. Über den Nachlaufbetrieb können die Wärmekapazitäten von verschiedenen Bauteilen wie Kompressorblock oder Zylinder genutzt werden. Während des Stillstands des Kompressors können die erhitzten Bauteile weiter gekühlt werden. Bei Wiederanlauf startet die Erwärmungskurve der Bauteile an einem niedrigeren Punkt als ohne Nachkühlung. Dadurch werden in dem auf Schienenfahrzeugen üblichen Aussetzbetrieb die Spitzentemperaturen und das Temperaturniveau der Bauteile insgesamt gesenkt. Dadurch werden die thermische Belastungen und damit einhergehende thermische Alterungsprozesse vermieden oder zumindest verringert werden. Entsprechend können für den Nachlaufbetrieb im zu kühlenden Bereich verbaute Materialien, aber auch Temperaturhistorien berücksichtigt werden. Sofern thermische Belastungen mit einhergehenden Alterungsprozessen nicht gänzlich vermieden werden können, besteht die Möglichkeit, Temperaturdaten zu Instandhaltungszwecken zu sammeln und/oder entsprechende Instandhaltungsmaßnahmen auf Basis der Temperaturdaten auszulösen.

Wenn die Kühleinrichtung nach Anlauf des Kompressors nicht oder nur teilweise aktiviert wird, kann die Steuerungsvorrichtung eine vorbestimmte Verzögerung vorsehen, die sich insbesondere in Abhängigkeit der Betriebsparameter des Kompressors ergibt, oder den Betrieb der Kühleinrichtung ebenfalls an vordefinierte Ereignisse, wie das Überschreiten eines Temperaturgrenzwertes, koppeln.

Insbesondere ist die Steuerungsvorrichtung dazu konfiguriert, die Kühleinrichtung zumindest solange nicht oder nur teilweise zu aktivieren, bis der Kompressor seine Betriebstemperatur erreicht hat.

Somit kann der Kompressor schnell auf Betriebstemperatur gebracht werden, ohne dass dies durch die Kühleinrichtung verzögert wird. Hierzu kann beispielsweise eine entsprechende Temperatur, wie die Bauteiltemperatur des Kompressors oder eine anderweitige die Betriebstemperatur des Kompressors repräsentierende Temperatur, über die Temperaturdetektionseinheit detektiert. Alternativ oder ergänzend kann die Steuerungsvorrichtung die Rückhaltung basierend auf hinterlegten Erfahrungswerten oder einem Algorithmus in Abhängigkeit der Betriebsbedingungen bzw. Betriebsparameter, die ein Erreichen der Betriebstemperatur erwarten lassen, vorsehen. In diesem Zusammenhang ist es auch möglich, den Kompressor mit energetisch optimierter Drehzahl, beispielsweise besonders langsam, um die Trägheit des Systems überwinden zu können, zu betreiben. Alternativ kann die Drehzahl des Kompressors erhöht und infolge verringert werden, um sich asymptotisch dem oberen Druckpunkt anzunähern, um so ein Abschalten möglichst lange zu verzögern.

In einem weiteren Aspekt betrifft die Erfindung ein Verfahren zur Steuerung einer Kühleinrichtung eines Kompressorsystems, aufweisend die Schritte:
- Detektieren einer Lufttemperatur, Öltemperatur und/oder Bauteiltemperatur des Kompressorsystems und
- Steuerung der Kühleinrichtung auf Basis einer detektierten Lufttemperatur, Öltemperatur und/oder Bauteiltemperatur.

Die Lufttemperatur, Öltemperatur und/oder Bauteiltemperatur kann hierzu über eine Temperaturdetektionseinheit, also direkt, gemessen oder aus anderweitigen Mess- und/oder Betriebsgrößen abgeleitet, insbesondere berechnet werden. Eine Ableitung muss im Gegensatz zu einer Berechnung keine quantitative konkrete Temperaturangabe ergeben, sondern kann die jeweilige Temperatur beispielsweise auf Basis vorbestimmter Grenzwerte anderweitiger Messgrößen qualitativ im Sinne vorbestimmter Grenzwerte einstufen. Eine solche Ableitung kann dabei auch Berechnungsschritte enthalten, wobei im Ergebnis die qualitative Bewertung maßgeblich ist. Im Gegensatz dazu liefert die Berechnung aus anderen Größen ein quantitatives Ergebnis für die Ansteuerung der Kühleinrichtung. Die konkrete quantitative Berechnung aus anderweitigen Messgrößen kann auch als indirekte Messung verstanden werden.

In Abhängigkeit des qualitativen Ergebnisses einer Ableitung und/oder des quantitativen Ergebnisses einer direkten oder indirekten Messung wird die Kühleinrichtung angesteuert. Durch die mechanische und signaltechnische Entkopplung des Betriebs der Kühleinrichtung vom Kompressorbetrieb durch die Ansteuerung auf Basis detektierter Temperaturen ergeben sich die bereits zum Kompressorsystem beschriebene Vorteile.

In einer Ausgestaltung des Verfahrens wird auf Basis der detektierten Lufttemperatur, und/ oder Öltemperatur und/oder Bauteiltemperatur zumindest ein Kühlfluidvolumenstromparameter, insbesondere eine Kühlfluidvolumenstromrate, eine Kühlfluidvolumenstromtemperatur und/oder ein Ein- und/oder Ausschaltzeitpunkt der Kühleinrichtung gesteuert.

Die Kühlfluidvolumenstromrate und/oder der Ein- und/oder Ausschaltzeitpunkt der Kühleinrichtung bewirkt eine vergleichsweise verzögerungsarme Einflussnahme auf den Temperaturhaushalt des Kompressorsystems, während bei der Änderung der Kühlfluidvolumenstromtemperatur die entsprechende Fluidträgheit gegenüber einer Temperaturänderung zu berücksichtigen ist. Die alternative oder ergänzende Auswahl der Kühlfluidvolumenstromtemperatur kann jedoch beispielsweise durch die Anbindung an Wärmetauscher, die Zuschaltung von Wärmetauschern und/oder anderweitige Konfigurationen eine energieeffiziente Kühlung darstellen. Wieder bezugnehmend auf die Ansteuerung der Kühlfluidvolumenstromrate und/oder des Ein- und/oder Ausschaltzeitpunkts, bietet die Änderung der Kühlfluidvolumenstromrate den Vorteil, dass hierbei die Komponenten der Kühleinrichtung gegenüber einem hochfrequenten Ein- und Ausschalten geschont werden. Anderseits lässt sich die unabhängige Ansteuerung der Kühleinrichtung über Ein- und/oder Ausschaltzeitpunkte auch für Kühleinrichtungen realisieren, bei denen eine Kühlfluidvolumenrate nicht anpassbar ist.

Aufgrund der hohen und kostengünstigen Verfügbarkeit wird als Fluid insbesondere Luft eingesetzt, also eine Luftkühlung vorgesehen. Es können aber auch andere fluide Wärmeträger, wie Wasser oder Öl eingesetzt werden. In diesem Zusammenhang ist es alternativ oder ergänzend auch möglich, die variable Kühlung durch Verwendung unterschiedlicher Wärmeträger mit entsprechend unterschiedlicher Wärmekapazität und/oder Wärmeleitfähigkeit vorzusehen. Hierzu kann die Kühleinrichtung mit jeweils unterschiedlichen Wärmeträgern arbeitende Kühler umfassen, die separat ansteuerbar sind und/oder zwischen unterschiedlichen Einlässen für unterschiedliche Wärmeträger schalten. Die Verwendung unterschiedlicher Wärmeträger sowie auch die Anpassung der Kühlfluidvolumenstromtemperatur kann bei niedrigen Umgebungstemperaturen, insbesondere im Aussetzbetrieb des Kompressors, auch dazu genutzt werden, eine Kondensatbildung zu vermeiden oder zumindest zu verringern. In einem solchen Fall arbeitet die Kühleinrichtung als Heizvorrichtung.

In einer Ausgestaltung wird, insbesondere durch die Steuerung einer Kühleinrichtung eines Kompressorsystems mit einem Kolbenkompressor, eine Öltemperatur und/oder Zwischenkühleraustrittstemperatur und/oder eine Nachkühleraustrittstemperatur auf Basis der detektierten Bauteiltemperatur gesteuert.

Die Bauteiltemperatur bezieht sich bei der Öltemperatur als Regelgröße insbesondere auf eine Bauteiltemperaturdetektion am Kompressor, während sich die Bauteiltemperatur in Bezug auf die Zwischenkühleraustrittstemperatur und/oder die Nachkühleraustrittstemperatur insbesondere auf eine Bauteiltemperaturdetektion am Zwischenkühler und/oder Nachkühler richtet. Es können aber auch alle genannten Bauteiltemperaturen gemessen und entsprechend in der Steuerungsvorrichtung berücksichtigt werden.

Alternativ wird insbesondere zur Steuerung einer Kühleinrichtung eines Kompressorsystems mit einem ölgeschmierten Rotationskompressor, eine Lufttemperatur, insbesondere eine Nachkühleraustrittstemperatur, auf Basis der detektierten Lufttemperatur, insbesondere einer detektierten Nachkühleraustrittstemperatur, und/oder der detektierten Öltemperatur, insbesondere einer detektierten Ölsumpftemperatur, gesteuert.

Sowohl die detektierte Lufttemperatur als auch die detektierte Öltemperatur erlauben es, Rückschlüsse auf ein Überhitzungs- oder Kondensatbildungsrisiko ziehen zu können. Insbesondere kann über die detektierte Öltemperatur auch die Wahrscheinlichkeit eines Wassereintrags ins Öl beurteilt werden. Durch Verwendung beider detektierten Temperaturen zur Ansteuerung der Lufttemperatur kann nicht nur eine redundante Ansteuerung ausgebildet werden, sondern es ist auch möglich, die Lufttemperatur hierüber bedarfsgerechter anzupassen. Beispielsweise kann die Steuerungsvorrichtung zumindest einen Kühlfluidvolumenstromparameter der Kühleinrichtung zum Zwecke einer Kühlleistungserhöhung ändern, wenn eine der detektierten Temperaturen oberhalb eines jeweiligen vorbestimmten Grenzwerts liegt. Zudem kann vorgesehen sein, dass die Änderung des zumindest einen Kühlfluidvolumenstromparameters in Abhängigkeit des Überschreitens des jeweiligen Grenzwerts durch die detektierte Lufttemperatur oder des Überschreitens des jeweiligen Grenzwerts durch die detektierte Öltemperatur unterschiedlich ausfällt, beispielsweise die Kühlleistung bei Überschreiten des Lufttemperaturgrenzwerts deutlich stärker erhöht wird als bei Überschreiten des Öltemperaturgrenzwerts oder umgekehrt.

In einer Weiterbildung erfolgt ein Differenzabgleich der detektierten Lufttemperatur und der detektierten Öltemperatur als Stellgröße für eine Steuerung zwischen einem internen und einem externen Ölkreislauf bei einer Temperaturdifferenz oberhalb eines vorbestimmten Grenzwerts.

Hieraus ergeben sich die bereits zum Kompressorsystem beschriebenen Vorteile.

In einem weiteren Aspekt werden bei der Steuerung Temperaturverluste, insbesondere Temperaturverluste über ein Gehäuse, und/oder Temperaturträgheiten, insbesondere eine Trägheit einer Öltemperatur, als Störgrößen, insbesondere über ein Proportionalglied, berücksichtigt.

Die Vorteile ergeben sich hier ebenfalls analog zu den zum Kompressorsystem angeführten Ausführungen. Zudem können verschiedene Temperaturverluste und/oder Trägheiten durch die Steuerungsvorrichtung unterschiedlich gewichtet werden, um die Ansteuerung der Kühleinrichtung bedarfsgerechter anzupassen.

Des Weiteren betrifft die Erfindung ein Computerprogrammprodukt mit einem auf einem maschinenlesbaren Träger gespeicherten Programmcode, der dazu ausgebildet ist, wenn er auf einer Datenverarbeitungsvorrichtung ausgeführt wird, die Datenverarbeitungsvorrichtung dazu veranlasst, das vorstehend beschriebene Verfahren auszuführen.

Über das Computerprogrammprodukt ist es unter anderem auf einfache Weise möglich, signaltechnisch angesteuerte Kühleinrichtungen herkömmlicher Kompressorsysteme nachzurüsten.

Im Folgenden wird die Erfindung anhand einer Ausführungsform unter Hinzuziehung der beigefügten Figuren näher erläutert. Die Figuren zeigen im Einzelnen:
F**igur 1** zeigt eine schematische Darstellung eines Kompressorsystems gemäß einer ersten Ausführungsform der Erfindung.
**Figur 2** zeigt eine schematische Darstellung eines Kompressorsystems gemäß einer zweiten Ausführungsform der Erfindung.
**Figur 3** zeigt eine schematische Darstellung eines Kompressorsystems gemäß einer dritten Ausführungsform der Erfindung.
**Figur 4** zeigt eine exemplarische Steuerung einer Kühleinrichtung, die auf ein Kompressorsystem gemäß den **Figuren 1 bis 3** angewendet werden kann.
**Figur 5** zeigt eine exemplarische Regelung einer Kühleinrichtung, die auf ein Kompressorsystem gemäß den **Figuren 1 bis 3** angewendet werden kann.

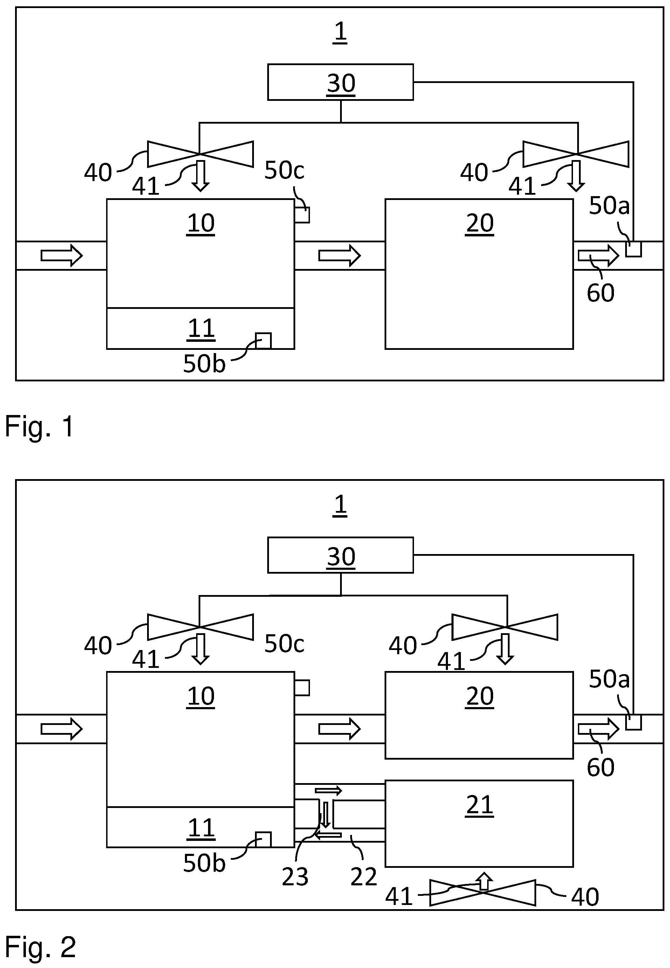

**Figur 1** zeigt eine schematische Darstellung eines Kompressorsystems 1 mit einem Kompressor 10 und einem Nachkühler 20 gemäß einer ersten Ausführungsform der Erfindung. Die zu verdichtende Luft wird gemäß der Pfeile zunächst durch den Kompressor 10 geführt, dort verdichtet und durchläuft anschließend den Nachkühler 20. Zudem umfasst das Kompressorsystem 1 eine Steuerungsvorrichtung 30, die die Kühleinrichtung, die in der vorliegenden Ausführungsform zwei Lüfter 40 umfasst, ansteuert. Beide Lüfter können im Betrieb jeweils einen Kühlluftvolumenstrom 41 erzeugen, der über den einen Lüfter 40 primär auf den Kompressor 10 und/oder auf den Kompressorauslass und über den anderen Lüfter 40 primär auf den Nachkühlerauslass und/oder den Nachkühler 20 gerichtet ist. Die Steuerungsvorrichtung 30 ist hier derart ausgebildet, dass sie sowohl die Ein- und Ausschaltzeitpunkte der Lüfter 40 als auch die Kühlluftvolumenstromrate der Lüfter 40 durch Ansteuerung der Lüfterdrehzahl anpassen kann.

In der vorliegenden Ausführungsform basiert die Ansteuerung der Lüfter 40 auf einer Auswertung der durch die Temperaturdetektionseinheiten 50a, 50b, 50c erfassten Temperaturen. Die Temperaturdetektionseinheit 50a detektiert eine Nachkühleraustrittstemperatur, die Temperaturdetektionseinheit 50b eine Ölsumpftemperatur des Ölsumpfs 11 des Kompressors 10 und die Temperaturdetektionseinheit 50c eine Bauteiltemperatur des Kompressors 10. Die Temperaturdetektionseinheiten 50a, 50b, 50c können sowohl über Leitungen mit der Steuerungsvorrichtung 30 verbunden sein, wie dies für die Temperaturdetektionseinheit 50a gezeigt ist, als auch zur kabellosen Kommunikation mit der Steuerungsvorrichtung 30 ausgebildet sein, wie dies durch Wegfall der Verbindungslinie für die Temperaturdetektionseinheiten 50b, 50c in **Figur 1** dargestellt ist. Übersteigt eine der detektierten Temperaturen einen jeweils vorbestimmten Grenzwert, so werden die Lüfter 40 unabhängig vom Betrieb des Kompressors eingeschaltet. Fällt im Gegensatz dazu zumindest eine der detektierten Temperaturen unterhalb die jeweiligen Grenzwerte für die detektierte Nachkühleraustrittstemperatur, die detektierte Ölsumpftemperatur und/oder die detektierte Bauteiltemperatur, werden die Lüfter 40 ausgeschaltet. Die Lüfter 40 werden hier einzeln bedarfsweise angesteuert, wobei zur Vereinfachung der Ansteuerung auch eine synchrone Ansteuerung vorgesehen werden kann. In letzterem Fall können zum präziseren Kühlmanagement verschieden Grenzwertkonstellationen in der Steuerungsvorrichtung 30 hinterlegt werden. Zudem kann die Steuerungsvorrichtung 30 die Kühlleistung der Lüfter 40 durch Ansteuerung der Lüfterdrehzahl temperaturabhängig anpassen.

Auch wenn die Lüfter 40 in der vorliegenden Ausführungsform über die detektierte Nachkühleraustrittstemperatur, die detektierte Ölsumpftemperatur und die detektierte Bauteiltemperatur angesteuert werden, kann die Steuerungsvorrichtung 30 alternativ oder ergänzend auch dazu ausgebildet sein, die Lüfter zumindest für einen vorbestimmten Zeitraum nach Schaltung des Kompressors in einen Aussetzbetrieb weiter zu betreiben, also einen Nachlaufbetrieb vorzusehen. Ein solcher Nachlaufbetrieb kann auch an die Höhe der zum Abschaltzeitpunkt detektierten Temperatur gekoppelt sein, so dass der Nachlaufbetrieb nur oberhalb des vorbestimmten Temperaturgrenzwerts vorgesehen wird und/oder die Dauer des Nachlaufbetriebs von einer solchen Temperatur abhängt.

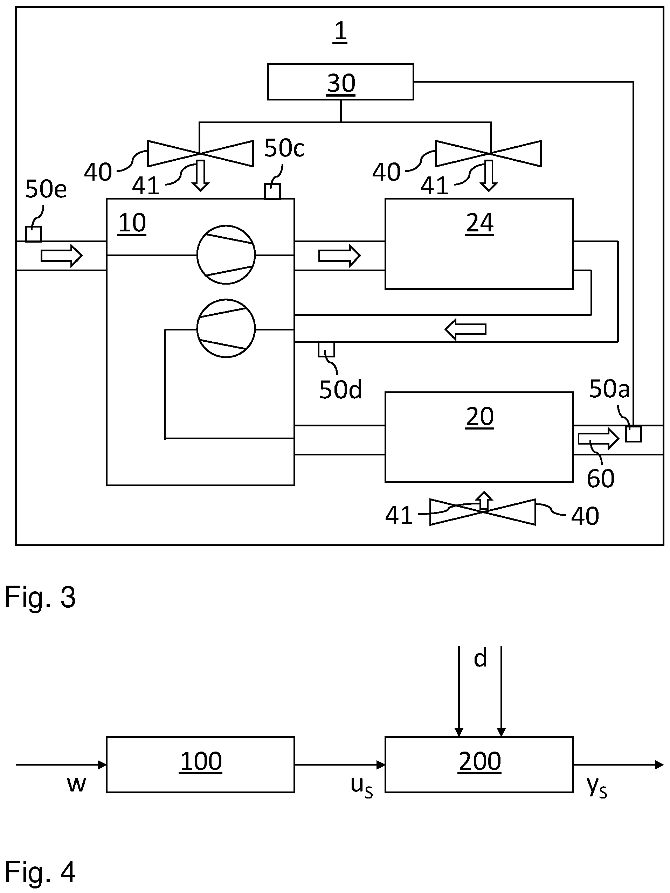

**Figur 2** zeigt beispielhaft einen ölgeschmierten Kompressor als exemplarische zweite Ausführungsform des Kompressorsystems 1. Hier, wie auch in **Figur 3**, werden für gleiche Komponenten gleiche Bezugszeichen verwendet. Die zweite Ausführungsform unterscheidet sich von der ersten Ausführungsform durch die Vorsehung eines inneren Ölkreislaufs 23 und eines äußeren Ölkreislaufs 22, der durch einen Ölkühler 21 geführt wird. Der Ölkühler 21 wird, wie der Kompressor 10 und der Nachkühler 20, durch einen Lüfter 40 bedarfsweise gekühlt. Der dem Ölkühler 21 zugeordnete Lüfter 40 wird gleichermaßen durch die Steuerungsvorrichtung 30 angesteuert, auch wenn hier aus Übersichtsgründen die signaltechnische Anbindung nicht eingezeichnet wurde. Zum Umschalten der Ölführung vom inneren Ölkreislauf 23 auf den äußeren Ölkreislauf 22, bei dem das Öl den Ölkühler 21 durchläuft, werden die durch die Temperaturdetektionseinheit 50a detektierte Nachkühleraustrittstemperatur sowie die durch die Temperaturdetektionseinheit 50b detektierte Ölsumpftemperatur berücksichtigt. Solange die Ölsumpftemperatur einen vorbestimmten maximalen Grenzwert nicht überschreitet und auch die Nachkühleraustrittstemperatur unterhalb eines vorbestimmten Grenzwerts bleibt, wird das Öl über den inneren Ölkreislauf 23 in den Ölsumpf 11 geleitet. Wird eines der Kriterien nicht eingehalten, erfolgt das Umschalten auf den äußeren Ölkreislauf. Entsprechend wird der dem Ölkühler 21 zugeordnete Lüfter 40 mit Umschalten auf den äußeren Ölkreislauf aktiviert. Eine Aktivierung kann aber auch an andere Ereignisse gekoppelt werden, wie an eine detektierte Ölsumpftemperatur, eine Temperatur des Ölkühlers oder vorzusehende Nach- oder Vorlaufbetriebe.

Als dritte Ausführungsform zeigt **Figur 3** exemplarisch ein Kompressorsystem 1 mit einem zweistufigen Kompressor als Kompressor 10. Die Prozessluft 60 durchläuft zunächst die erste Kompressionsstufe des Kompressors 10, um dann in einen Zwischenkühler 24 geleitet zu werden. Die Zwischenkühleraustrittstemperatur wird dabei über die Temperaturdetektionseinheit 50d detektiert. Die Prozessluft 60 wird nach Durchlauf des Zwischenkühlers 24 der zweiten Kompressionsstufe des Kompressors 10 zugeführt und anschließend über den Nachkühler 20 abgeleitet.

**Figur 3** zeigt zudem exemplarisch auch eine Temperaturdetektionseinheit 50e zur Detektion einer Ansaugtemperatur oder Umgebungstemperatur, wie sie auch für die vorherigen Ausführungsformen anwendbar sein kann. Die detektierte Ansaugtemperatur kann für die Vorsehung eines auf Betriebs- und/oder Umgebungsdaten basierten Nachlaufbetriebs der Kühleinrichtung genutzt werden, so dass die Kühleinrichtung für einen vorbestimmten Zeitraum und/oder bis zum Eintritt eines vordefinierten Ereignisses weiter betrieben wird. Ein entsprechend vordefiniertes Ereignis kann beispielsweise das Unterschreiten einer maximalen Differenztemperatur zur Ansaugtemperatur sein.

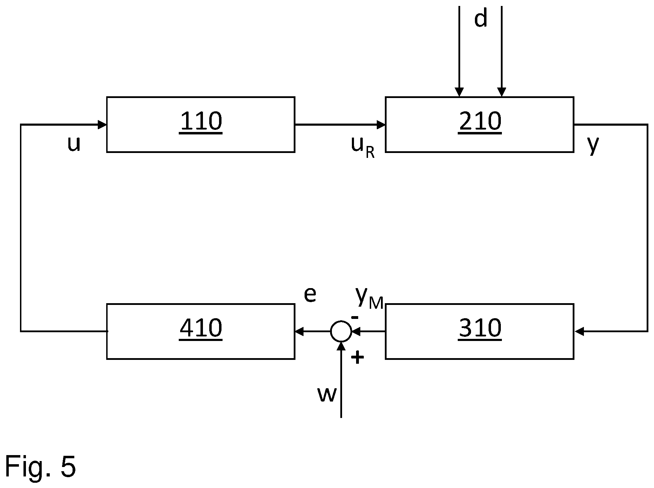

**Figur 4** zeigt eine exemplarische Steuerung einer Kühleinrichtung, die auf ein Kompressorsystem gemäß den **Figuren 1 bis 3** angewendet werden kann. Eine solche Steuerung umfasst allgemein ein Stellglied 100 und eine Steuerstrecke 200, wobei die Steuerung gemäß einer Führungsgröße w, einer Stellgröße u_{S} und unter Berücksichtigung möglicher Störgrößen d die zu steuernde Größe y_{S} steuert. In Anwendung auf die in **Figur 1** gezeigte erste Ausführungsform wird beispielsweise die Lufttemperatur als zu steuernde Größe y_{S} über den durch die Lüfter 40 bereitgestellten Kühlluftvolumenstrom als Stellgröße u_{S} und unter Berücksichtigung der Temperaturverluste und Temperaturträgheiten als Störgrößen d gesteuert. Im Gegensatz zu der in **Figur 5** dargestellten exemplarischen Regelung erfolgt die Steuerung hier ereignisbasiert, beispielsweise gemäß der Überschreitung oder Unterschreitung eines jeweils vorbestimmten Grenzwerts der detektierten Temperaturen. Die Ansteuerung der Lüfter erfolgt dann anhand vorbestimmter Steuerungsvorgaben, während bei der Regelung die Steuerungsvorgaben gemäß ermittelter Regeldifferenzen durch die Steuerungsvorrichtung 30 angepasst werden.

Die entsprechend in **Figur 5** gezeigte Regelung umfasst ein Stellglied 110, eine Regelstrecke 210, ein Messglied 310 und einen Regler 410. In Anwendung auf die Steuerungsvorrichtung 30 des Kompressorsystems 1 gemäß der in **Figur 1** veranschaulichten Ausführungsform werden die Nachlasskühleraustrittstemperatur der Luft sowie die Ölsumpftemperatur als Regelgrößen y gemessen und die Differenz zwischen der jeweiligen Führungsgröße w und dem ermittelten Istwert y_{M} gebildet. Aus der Regeldifferenz e wird über den Regler 410 die Steuergröße u an das Stellglied 110 übergeben. Die Stellgröße u_{R}, hier beispielsweise die Lüfterdrehzahl, findet dann wiederum Eingang in die Regelstrecke, die wiederum die Temperaturverluste und Temperaturträgheiten als Störgrößen d berücksichtigt.

Sofern die Lüfter 40 bzw. deren jeweilige Lüfterdrehzahlen unabhängig voneinander angesteuert werden, kann für jeden der Lüfter ein separater Regelkreis vorgesehen werden. Ebenso kann die Regelung aber auch gemäß vorstehender Ausführungen die Lüfter zunächst gemeinsam, insbesondere bei gleicher Lüfterdrehzahl, ansteuern und jeweilige unabhängige Anpassungen von einer Differenz der Regelgrößen voneinander abhängig machen. In diesem Fall geht die Regeldifferenz der Differenz der Regelgrößen zur Führungsgröße dieser Differenz der Regelgrößen ebenfalls in die Regelung ein, das heißt, die Differenz der Regelgrößen bedingt in Abhängigkeit ihrer Regeldifferenz eine unabhängige Ansteuerung der Lüfter 40. Die Differenz der Regelgrößen, also die hier die Differenz zwischen der Nachkühleraustrittstemperatur und der Ölsumpftemperatur kann zudem auch dazu genutzt werden, den internen und externen Ölkreislauf des Kompressors 10 als zweite Stellgröße anzusteuern.

Die Erfindung ist nicht auf die beschriebenen Ausführungsformen beschränkt. Auch wenn die Kühleinrichtung anhand der Verwendung von Lüftern beschrieben wurde, können auch anderweitige Kühleinheiten, wie Wärmetauscher, an denen die Luft im Kompressorsystem vorbei- und/oder hindurchgeführt wird, verwendet werden. Die Kühlleistung der Wärmetauscher kann durch deren Positionierung, Orientierung und/oder bei den Wärmetauscher durchströmenden Wärmeträgern durch die Kühlfluidvolumenstromrate, die Kühlfluidvolumenstromtemperatur und/oder einen Wechsel des Wärmeträgers angepasst werden.

### BEZUGSZEICHENLISTE

- 1: Kompressorsystem
- 10: Kompressor
- 11: Ölsumpf
- 20: Nachkühler
- 21: Ölkühler
- 22: äußerer Ölkreislauf
- 23: innerer Ölkreislauf
- 24: Zwischenkühler
- 30: Steuerungsvorrichtung
- 40: Lüfter
- 41: Kühlluftvolumenstrom
- 50a: Temperaturdetektionseinheit (Nachkühleraustrittstemperatur)
- 50b: Temperaturdetektionseinheit (Ölsumpftemperatur)
- 50c: Temperaturdetektionseinheit (Bauteiltemperatur)
- 50d: Temperaturdetektionseinheit (Zwischenkühleraustrittstemperatur)
- 50e: Temperaturdetektionseinheit (Ansaugtemperatur / Umgebungstemperatur)
- 60: Prozessluftstrom
- 100, 110: Stellglied
- 200: Steuerstrecke
- 210: Regelstrecke
- 310: Messglied
- 410: Regler
- d: Störgröße(n)
- e: Regeldifferenz
- u: Steuergröße
- u_{R}, u_{S}: Stellgröße
- y: Regelgröße
- y_{M}: Istwert
- y_{S}: zu steuernde Größe
- w: Führungsgröße

## Patentansprüche

1. Kompressorsystem (1) für ein Schienenfahrzeug, aufweisend:
einen Kompressor (10),
eine Kühleinrichtung (40),
einen Nachkühler (20), der dem Kompressor (10) in Strömungsrichtung einer durch den Kompressor (10) strömenden Luft nachgelagert ist, und
eine Steuerungsvorrichtung (30),
wobei die Steuerungsvorrichtung (30) dazu konfiguriert ist, die Kühleinrichtung (40) unabhängig vom Betrieb des Kompressors (10) anzusteuern,
und eine variable Kühlfluidvolumenstromrate bereitstellen zu können, die durch die Steuerungsvorrichtung (30) als Stellgröße (u_{R}, u_{S}) vorgebbar ist,
wobei das Kompressorsystem eine Temperaturdetektionseinheit (50a, 50b, 50c, 50d) zur Detektion einer Nachkühleraustrittstemperatur der Luft und einer Ölsumpftemperatur aufweist, wobei die Steuerungsvorrichtung (30) dazu konfiguriert ist, die Kühleinrichtung (40) auf Basis einer durch die Temperaturdetektionseinheit (50a, 50b, 50c, 50d) detektierten Temperaturen anzusteuern,
**dadurch gekennzeichnet, dass**
die Steuerungsvorrichtung (30) dazu konfiguriert ist, einen Differenzabgleich der Nachkühleraustrittstemperatur der Luft mit einem jeweiligen vorbestimmten Grenzwert der Nachkühleraustrittstemperatur der Luft und der Ölsumpftemperatur mit einem jeweiligen vorbestimmten Grenzwert der Ölsumpftemperatur als Eingangsgröße für die Ansteuerung der Kühleinrichtung (40) zu berücksichtigen.

2. Kompressorsystem (1) nach Anspruch 1, wobei die Kühlfluidvolumenstromrate eine Kühlluftvolumenstromrate ist.

3. Kompressorsystem (1) nach Anspruch 1 oder 2, wobei das Kompressorsystem eine Temperaturdetektionseinheit (50a, 50b, 50c, 50d) zur Detektion einer Bauteiltemperatur aufweist, wobei die Steuerungsvorrichtung (30) dazu konfiguriert ist, die Kühleinrichtung (40) zusätzlich auf Basis der Bauteiltemperatur anzusteuern.

4. Kompressorsystem (1) nach einem der vorangehenden Ansprüche, wobei das Kompressorsystem (1) einen Zwischenkühler (24) umfasst, der dem Kompressor (10) in Strömungsrichtung der durch den Kompressor (10) strömenden Luft nachgelagert ist, und die Steuerungsvorrichtung (30) dazu konfiguriert ist, die Kühleinrichtung (40) auf Basis einer durch die Temperaturdetektionseinheit (50a, 50b, 50c, 50d) detektierten Zwischenkühleraustrittstemperatur der Luft anzusteuern.

5. Kompressorsystem (1) nach einem der vorangehenden Ansprüche, wobei die Steuerungsvorrichtung (30) eine zentrale Steuerungsvorrichtung des Kompressorsystems (1) ist.

6. Kompressorsystem (1) nach Anspruch 5, wobei die zentrale Steuerungsvorrichtung ein Inverter ist.

7. Kompressorsystem (1) nach einem der vorangehenden Ansprüche,
wobei die Temperaturdetektionseinheit (50a, 50d) oder eine weitere Temperaturdetektionseinheit im Bereich des Nachkühlers (20) und/oder des Zwischenkühlers (24) des Kompressorsystems vorgesehen ist.

8. Kompressorsystem (1) nach einem der vorangehenden Ansprüche,
wobei die Steuerungsvorrichtung (30) dazu konfiguriert ist, den Differenzabgleich als Stellgröße (u_{R}, u_{S}) zur Steuerung eines internen und externen Ölkreislauf bei einer jeweiligen Temperaturdifferenz oberhalb eines vorbestimmten Grenzwerts zu nutzen.

9. Kompressorsystem (1) nach einem der vorherigen Ansprüche,
wobei die Steuerungsvorrichtung (30) dazu konfiguriert ist, für die Ansteuerung der Kühleinrichtung (40) Temperaturverluste und/oder Temperaturträgheiten als Störgrößen (d) zu berücksichtigen.

10. Kompressorsystem (1) nach einem der vorherigen Ansprüche,
wobei die Kühleinrichtung (40) zumindest einen Lüfter (40) umfasst.

11. Kompressorsystem (1) nach einem der vorherigen Ansprüche,
wobei die Steuerungsvorrichtung (30) dazu konfiguriert ist, einen Nachlaufbetrieb der Kühleinrichtung (40) auszuführen, nachdem der Kompressor (10) in einen Aussetzbetrieb geschaltet wurde, und/oder die Kühleinrichtung (40) nicht oder nur teilweise zu aktivieren, wenn der Kompressor (10) anläuft.

12. Verfahren zur Steuerung einer Kühleinrichtung (40) eines Kompressorsystems (1) gemäß einem der Ansprüche 1 bis 11, aufweisend die Schritte:
- Detektieren einer Lufttemperatur, Ölsumpftemperatur und/oder Bauteiltemperatur des Kompressorsystems (1) und
- Steuerung der Kühleinrichtung (40) auf Basis einer detektierten Lufttemperatur, Ölsumpftemperatur und/oder Bauteiltemperatur,
wobei zumindest ein Differenzabgleich der Nachkühleraustrittstemperatur der Luft mit einem jeweiligen vorbestimmten Grenzwert der Nachkühleraustrittstemperatur der Luft und der Ölsumpftemperatur mit einem jeweiligen vorbestimmten Grenzwert der Ölsumpftemperatur als Eingangsgröße für die Ansteuerung der Kühleinrichtung (40) berücksichtigt wird.

13. Verfahren nach Anspruch 12,
wobei auf Basis der detektierten Lufttemperatur, Öltemperatur und/oder Bauteiltemperatur zumindest ein Kühlfluidvolumenstromparameter der Kühleinrichtung (40) gesteuert wird.

14. Verfahren nach Anspruch 13,
wobei durch die Steuerung einer Kühleinrichtung (40) eines Kompressorsystems (1) mit einem Kolbenkompressor eine Öltemperatur und/oder eine Zwischenkühleraustrittstemperatur und/ oder eine Nachkühleraustrittstemperatur auf Basis der detektierten Bauteiltemperatur gesteuert wird oder
wobei durch die Steuerung einer Kühleinrichtung (40) eines Kompressorsystems (1) mit einem ölgeschmierten Rotationskompressor eine Lufttemperatur auf Basis der detektierten Lufttemperatur und/oder der detektierten Öltemperatur gesteuert wird.

15. Verfahren nach Anspruch 14,
wobei der Differenzabgleich der detektierten Lufttemperatur mit einem jeweiligen vorbestimmten Grenzwert der Nachkühleraustrittstemperatur der Luft und der detektierten Ölsumpftemperatur mit einem jeweiligen vorbestimmten Grenzwert der Ölsumpftemperatur als Stellgröße (u_{R}, u_{S}) für eine Steuerung zwischen einem internen und einem externen Ölkreislauf bei einer Temperaturdifferenz oberhalb eines vorbestimmten Grenzwerts erfolgt.

16. Verfahren nach einem der Ansprüche 12 bis 15,
wobei bei der Steuerung Temperaturverluste und/oder Temperaturträgheiten als Störgrößen (d) berücksichtigt werden.

17. Computerprogrammprodukt mit einem auf einem maschinenlesbaren Träger gespeicherten Programmcode, der dazu ausgebildet ist, wenn er auf einer Datenverarbeitungsvorrichtung ausgeführt wird, die Datenverarbeitungsvorrichtung dazu veranlasst, das Verfahren nach einem der Ansprüche 12 bis 16 auszuführen.

## Claims

1. Compressor system (1) for a rail vehicle, having:
a compressor (10),
a cooling apparatus (40),
a post-cooler (20) located downstream of the compressor (10) in the direction of flow of air flowing through the compressor (10), and
a control device (30),
wherein the control device (30) is configured to control the cooling apparatus (40) independently of the operation of the compressor (10), and to be able to provide a variable cooling fluid volumetric flow rate, which can be specified by the control device (30) as a manipulated variable (u_{R}, u_{S}),
wherein the compressor system has a temperature detection unit (50a, 50b, 50c, 50d) for detecting a post-cooler outlet temperature of the air and an oil sump temperature, wherein the control device (30) is configured to control the cooling apparatus (40) on the basis of temperatures detected by the temperature detection unit (50a, 50b, 50c, 50d), **characterized in that**
the control device (30) is configured to take into account a difference comparison of the post-cooler outlet air temperature with a respective predetermined limit value of the post-cooler outlet air temperature and the oil sump temperature with a respective predetermined limit value of the oil sump temperature as an input variable for controlling the cooling apparatus (40).

2. Compressor system (1) according to claim 1, wherein the cooling fluid volumetric flow rate is a cooling air volumetric flow rate.

3. Compressor system (1) according to claim 1 or 2, wherein the compressor system has a temperature detection unit (50a, 50b, 50c, 50d) for detecting a component temperature, wherein the control device (30) is configured to additionally control the cooling apparatus (40) based on the component temperature.

4. Compressor system (1) according to any one of the preceding claims, wherein the compressor system (1) comprises an intermediate cooler (24) which is located downstream of the compressor (10) in the direction of flow of the air flowing through the compressor (10), and the control device (30) is configured to control the cooling apparatus (40) based on an intermediate cooler outlet air temperature detected by the temperature detection unit (50a, 50b, 50c, 50d).

5. Compressor system (1) according to any one of the preceding claims, wherein the control device (30) is a central control device of the compressor system (1).

6. Compressor system (1) according to claim 5, wherein the central control device is an inverter.

7. Compressor system (1) according to any one of the preceding claims,
wherein the temperature detection unit (50a, 50d) or a further temperature detection unit is provided in the region of the post-cooler (20) and/or the intermediate cooler (24) of the compressor system.

8. Compressor system (1) according to any one of the preceding claims,
wherein the control device (30) is configured to use the difference comparison as a manipulated variable (u_{R}, u_{S}) for controlling an internal and external oil circuit at a respective temperature difference above a predetermined limit value.

9. Compressor system (1) according to any one of the preceding claims,
wherein the control device (30) is configured to take temperature losses and/or temperature inertia into account as disturbance variables (d) for controlling the cooling apparatus (40).

10. Compressor system (1) according to any one of the preceding claims,
wherein the cooling apparatus (40) comprises at least one fan (40).

11. Compressor system (1) according to any one of the preceding claims,
wherein the control device (30) is configured to carry out a run-on operation of the cooling apparatus (40) after the compressor (10) has been switched to a stop operation, and/or to activate the cooling apparatus (40) only partially or not at all when the compressor (10) starts up.

12. Method for controlling a cooling apparatus (40) of a compressor system (1) according to any one of claims 1 to 11, having the steps:
- detecting an air temperature, oil sump temperature and/or component temperature of the compressor system (1), and
- controlling the cooling apparatus (40) on the basis of a detected air temperature, oil sump temperature and/or component temperature,
wherein at least one difference comparison of the post-cooler outlet temperature of the air with a respective predetermined limit value of the post-cooler outlet air temperature and of the oil sump temperature with a respective predetermined limit value of the oil sump temperature is taken into account as an input variable for controlling the cooling apparatus (40).

13. Method according to claim 12,
wherein at least one cooling fluid volume flow parameter of the cooling apparatus (40) is controlled on the basis of the detected air temperature, oil temperature and/or component temperature.

14. Method according to claim 13,
wherein through the control of a cooling apparatus (40) of a compressor system (1) with a piston compressor, an oil temperature and/or an intermediate cooler outlet temperature and/or a post-cooler outlet temperature is controlled on the basis of the detected component temperature, or
wherein through the control of a cooling apparatus (40) of a compressor system (1) with an oil-lubricated rotary compressor, an air temperature is controlled on the basis of the detected air temperature and/or the detected oil temperature.

15. Method according to claim 14,
wherein the difference comparison between the detected air temperature and a respective predetermined limit value of the post-cooler outlet air temperature and the detected oil sump temperature and a respective predetermined limit value of the oil sump temperature is used as a manipulated variable (u_{R}, u_{S}) for control between an internal and an external oil circuit at a temperature difference above a predetermined limit value.

16. Method according to any one of claims 12 to 15,
wherein in the control temperature losses and/or thermal inertia are taken into account as disturbance variables (d).

17. Computer program product having a program code which is stored on a machine-readable medium and which is configured such that, when executed on a data-processing apparatus, the data-processing device causes the method according to any one of claims 12 to 16 to be carried out.

## Revendications

1. Système de compresseur (1) pour un véhicule ferroviaire présentant :
un compresseur (10),
un dispositif de refroidissement (40),
un refroidisseur final (20) qui est logé en aval du compresseur (10) dans le sens d'écoulement d'un air circulant à travers le compresseur (10), et
un dispositif de commande (30),
dans lequel le dispositif de commande (30) est configuré afin de commander le dispositif de refroidissement (40) indépendamment du fonctionnement du compresseur (10), et de pouvoir fournir un débit volumétrique de fluide de refroidissement qui peut être prédéfini par le dispositif de commande (30) comme grandeur de réglage (u_{R}, u_{S}),
dans lequel le système de compresseur présente une unité de détection de température (50a, 50b, 50c, 50d) pour la détection d'une température de sortie de refroidisseur final de l'air et d'une
température de carter d'huile, dans lequel le dispositif de commande (30) est configuré afin de commander le dispositif de refroidissement (40) sur la base d'une température détectée par l'unité de détection de température (50a, 50b, 50c, 50d), **caractérisé en ce que**
le dispositif de commande (30) est configuré afin de tenir compte d'une comparaison différentielle de la température de sortie de refroidisseur final de l'air avec une valeur limite prédéterminée respective de la température de sortie de refroidisseur final de l'air et de la température de carter d'huile avec une valeur de limite prédéterminée respective de la température de carter d'huile comme grandeur d'entrée pour la commande du dispositif de refroidissement (40).

2. Système de compresseur (1) selon la revendication 1, dans lequel le débit volumétrique de fluide de refroidissement est un débit volumétrique d'air de refroidissement.

3. Système de compresseur (1) selon la revendication 1 ou 2, dans lequel le système de compresseur présente une unité de détection de température (50a, 50b, 50c, 50d) pour la détection d'une température de composant, dans lequel le dispositif de commande (30) est configuré afin de commander le dispositif de refroidissement (40) en outre sur la base de la température de composant.

4. Système de compresseur (1) selon l'une quelconque des revendications précédentes, dans lequel le système de compresseur (1) comprend un refroidisseur intermédiaire (24) qui est logé en aval du compresseur (10) dans le sens d'écoulement de l'air circulant à travers le compresseur (10), et le dispositif de commande (30) est configuré afin de commander le dispositif de refroidissement (40) sur la base d'une température de sortie de refroidisseur intermédiaire de l'air détectée par l'unité de détection de température (50a, 50b, 50c, 50d).

5. Système de compresseur (1) selon l'une quelconque des revendications précédentes, dans lequel le dispositif de commande (30) est un dispositif de commande central du système de compresseur (1).

6. Système de compresseur (1) selon la revendication 5, dans lequel le dispositif de commande central est un inverseur.

7. Système de compresseur (1) selon l'une quelconque des revendications précédentes,
dans lequel l'unité de détection de température (50a, 50d) ou une autre unité de détection de température est prévue dans la zone du refroidisseur final (20) et/ou du refroidisseur intermédiaire (24) du système de compresseur.

8. Système de compresseur (1) selon l'une quelconque des revendications précédentes,
dans lequel le dispositif de commande (30) est configuré afin d'utiliser la comparaison différentielle comme grandeur de réglage (UR, US) pour la commande d'un circuit d'huile interne et d'un circuit d'huile externe en cas de différence de température respective supérieure à une valeur limite prédéterminée.

9. Système de compresseur (1) selon l'une quelconque des revendications précédentes,
le dispositif de commande (30) est configuré afin de tenir compte pour la commande du dispositif de refroidissement (40) de pertes de température et/ou d'inerties de température comme grandeurs perturbatrices (d).

10. Système de compresseur (1) selon l'une quelconque des revendications précédentes,
dans lequel le dispositif de refroidissement (40) comprend au moins un ventilateur (40).

11. Système de compresseur (1) selon l'une quelconque des revendications précédentes,
dans lequel le dispositif de commande (30) est configuré afin d'exécuter un fonctionnement de marche par inertie du dispositif de refroidissement (40) après que le compresseur (10) a été commuté dans un mode d'arrêt et/ou de ne pas activer ou seulement partiellement le dispositif de refroidissement (40) lorsque le compresseur (10) démarre.

12. Procédé de commande d'un dispositif de refroidissement (40) d'un système de compresseur (1) selon l'une quelconque des revendications 1 à 11, présentant les étapes suivantes :
- la détection d'une température d'air, d'une température de carter d'huile et/ou d'une température de composant du système de compresseur (1) et
- la commande du dispositif de refroidissement (40) sur la base d'une température d'air, d'une température de carter d'huile et/ou d'une température de composant détectée,
dans lequel au moins une comparaison différentielle de la température de sortie de refroidisseur final de l'air avec une valeur limite prédéterminée respective de la température de sortie de refroidisseur final de l'air et de la température de carter d'huile avec une valeur limite prédéterminée respective de la température de carter d'huile comme grandeur d'entrée pour la commande du dispositif de refroidissement (40).

13. Procédé selon la revendication 12,
dans lequel sur la base de la température d'air, de la température d'huile et/ou de la température de composant détectée, au moins un paramètre de courant volumique de fluide de refroidissement du dispositif de refroidissement (40) est commandé.

14. Procédé selon la revendication 13,
dans lequel une température d'huile et/ou une température de sortie de refroidisseur intermédiaire et/ou une température de sortie de refroidisseur final est commandée sur la base de la température de composant détectée par la commande d'un dispositif de refroidissement (40) d'un système de compresseur (1) avec un compresseur à piston ou
dans lequel une température d'air est commandée sur la base de la température d'air détectée et/ou de la température d'huile détectée par la commande d'un dispositif de refroidissement (40) d'un système de compresseur (1) avec un compresseur rotatif lubrifié.

15. Procédé selon la revendication 14,
dans lequel la comparaison différentielle de la température d'air détectée avec une valeur limite prédéterminée respective de la température de sortie de refroidisseur final de l'air et de la température de carter d'huile avec une valeur limite prédéterminée respective de la température de carter d'huile est effectuée comme grandeur de réglage (UR, US) pour une commande entre un circuit d'huile interne et un circuit d'huile externe en cas de différence de température au-dessus d'une valeur limite prédéterminée.

16. Procédé selon l'une quelconque des revendications 12 à 15,
dans lequel lors de la commande, des pertes de température et/ou des inerties de température sont prises en considération comme grandeurs perturbatrices (d).

17. Produit de programme informatique avec un code de programme enregistré sur un support lisible par machine qui est formé, lorsqu'il est exécuté sur un dispositif de traitement de données, à inciter le dispositif de traitement de données à exécuter le procédé selon l'une quelconque des revendications 12 à 16.
